(19) Europäisches Patentamt
European Patent Office
Office européen des brevets

(11) **EP 4 163 809 A1**

(12) **EUROPEAN PATENT APPLICATION**
published in accordance with Art. 153(4) EPC

(43) Date of publication:
**12.04.2023 Bulletin 2023/15**

(21) Application number: **20938552.5**

(22) Date of filing: **05.06.2020**

(51) International Patent Classification (IPC):
***G06F 21/55*** *(2013.01)*    ***G06F 21/56*** *(2013.01)*

(52) Cooperative Patent Classification (CPC):
**G06F 21/55; G06F 21/56**

(86) International application number:
**PCT/JP2020/022422**

(87) International publication number:
**WO 2021/245944 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **INUI, Maki**
**Kawasaki-shi, Kanagawa 211-8588 (JP)**
• **FUJISHIMA, Yuki**
**Kawasaki-shi, Kanagawa 211-8588 (JP)**
• **OIKAWA, Takanori**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57)    Data is efficiently extracted based on a communication risk.

A control unit (11) determines risk levels of pseudo session data (dp) and session data segment (d3) and collects file information from the pseudo session data (dp) and the session data segment (d3). In this case, because no file is included in the session data segment (d3) and a file is included in the pseudo session data (dp), file information is collected from the file included in the pseudo session data (dp). In addition, an a.exe file is included in the pseudo session data (dp) and is associated with a schtasks command associated with 3 as the risk level. Thus, the control unit (11) collects, as the file information, meta information, a file hash value, and a file main body from the a.exe file.

FIG. 1

**Description**

Technical Field

The embodiments relate to an information processing program, an information processing method, and an information processing apparatus.

Background Art

Along with the spread of networks as typified by the Internet, various kinds of information have been computerized and exchanged via these networks. Under this circumstance, the importance of security against the threat to these networks has been increasing.

As one of the security-related techniques, for example, there has been proposed a technique for determining the presence or absence of an unauthorized access based on an analysis target file outputted by an application capable of recording communication logs. There has also been proposed a technique for determining the risk of access by deriving an index value indicating the importance of the access and an index value indicating the probability that the access is an unauthorized access.

Citation List

Patent Literature

PTL1: Japanese Laid-open Patent Publication No. 2002-318734
PTL2: Japanese Laid-open Patent Publication No. 2018-041316

Summary of Invention

Technical Problem

In network security, for example, when a cyberattack is received, it is important to promptly understand the whole picture of the attack so as to minimize the damage. If the malware (malicious software created to operate harmfully in an unauthorized way) used by the attacker is understood at an early stage, it is possible to manage the attack promptly. Thus, a technique that enables efficient extraction of malware-related data based on a communication risk is demanded.

It is an object in one aspect of the embodiments to provide an information processing program, an information processing method, and an information processing apparatus capable of efficiently extracting data based on a communication risk.

Solution to Problem

To solve the above problem, there is provided an information processing program. This information processing program causes a computer to execute a process including: generating a group of data segments by dividing communication data into sessions; extracting, from the group of data segments, data segments which have identical identification information and whose session interval is equal to or less than a threshold; generating linked data by linking the extracted data segments; determining a communication risk based on certain information included in the linked data; and collecting file information based on the risk from a file included in the linked data.

In addition, to solve the above problem, there is provided an information processing method in which a computer performs the same control as in the above information processing program.

In addition, to solve the above problem, there is provided an information processing apparatus that performs the same control as in the above information processing program.

Advantageous Effects of Invention

In one aspect, data is efficiently extracted based on a communication risk.

The above object, other objects, features, and advantages of the embodiments will become apparent from the accompanying drawings illustrating the embodiments suitable as examples of the present technique and from the following related description.

Brief Description of Drawings

FIG. 1 illustrates an example of an information processing apparatus according to a first embodiment;
FIG. 2 illustrates an example of an information processing system according to a second embodiment;
FIG. 3 illustrates an example of a functional block diagram of a server apparatus;
FIG. 4 illustrates an example of a hardware configuration of the server apparatus;
FIG. 5 illustrates an example of table information indicating a correspondence relationship between commands and risk levels;
FIG. 6 illustrates an example of table information indicating a correspondence relationship between risk levels and file information;
FIG. 7 illustrates an example of an operation from dividing a communication log into segments to collecting file information;
FIG. 8 illustrates an example of an operation from dividing a communication log into segments to collecting file information;
FIG. 9 illustrates an example of a communication log;
FIG. 10 illustrates examples of session data segments;
FIG. 11 illustrates examples of session intervals;
FIG. 12 illustrates an example of generation of pseudo session data;
FIG. 13 illustrates an example of a command-risk level correspondence table;
FIG. 14 illustrates an example of a risk level-file information correspondence table;
FIG. 15 illustrates an example of determination of risk levels;
FIG. 16 illustrates an example of collection of file information;
FIG. 17 is a flowchart illustrating an example of an operation of generating pseudo session data;
FIG. 18 is a flowchart illustrating an example of an operation of collecting file information based on a risk level; and
FIG. 19 is a flowchart illustrating an example of an operation of collecting file information based on a risk level.

Description of Embodiments

Hereinafter, embodiments will be described with reference to drawings.

[First Embodiment]

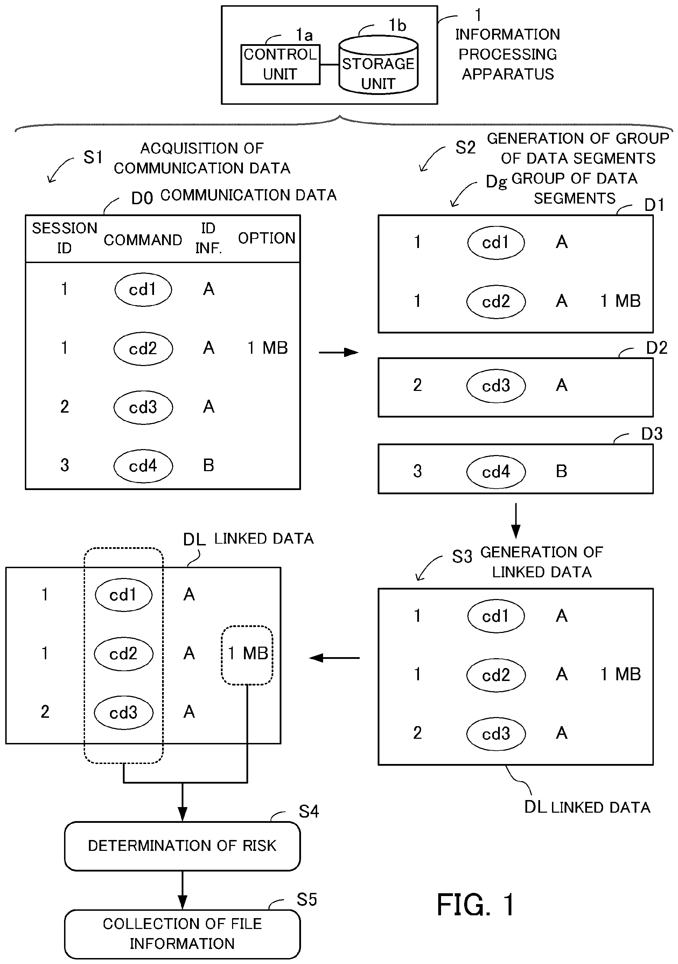

A first embodiment will be described with reference to FIG. 1. FIG. 1 illustrates an example of an information processing apparatus according to a first embodiment. This information processing apparatus 1 includes a control unit 1a and a storage unit 1b.

The control unit 1a generates a group of data segments by dividing communication data into sessions and extracts, from the group of data segments, data segments which have identical identification information and whose session interval is equal to or less than a threshold. In addition, the control unit 1a generates linked data by linking the extracted data segments and determines a communication risk based on certain information included in the linked data. In addition, the control unit 1a collects file information based on the risk from a file included in the linked data.

The storage unit 1b stores the communication data, a correspondence relationship between the certain information and the risk, and the collected file information, for example. The functions of the control unit 1a are realized by causing a processor (not illustrated) of the information processing apparatus 1 to execute a predetermined program.

An operation will be described by using an example illustrated in FIG. 1.

[Step S1] The control unit 1a acquires communication data D0. The communication data D0 includes session IDs (Identities), commands, identification information (ID Inf.), and options. The individual identification information corresponds to, for example, account information or credential information (a user ID, a password, or the like) used for user authentication.

In the communication data D0, the sessions based on commands cd1 and cd2 are assigned 1 as their session ID. The session based on a command cd3 is assigned 2 as its session ID, and the session based on a command cd4 is assigned 3 as its session ID. In addition, the identification information of any one of the sessions having the session ID 1 or 2 is A, and the option corresponding to the command cd2 indicates that a file of 1 MB has been written. The identification information of the session having the session ID 3 is B.

[Step S2] The control unit 1a divides the communication data D0 into sessions so as to generate a group of data segments Dg including the data segments D1, D2, and D3.

[Step S3] The control unit 1a extracts, from the group of data segments Dg, data segments which have identical identification information and whose session interval is equal to or less than a threshold. The data segments D1 and D2 have the identical identification information A. In addition, assuming that the session interval between the data segments D1 and D2 is equal to or less than the threshold (the session interval will be described below), the control unit 1a extracts the data segments D1 and D2 from the group of data segments Dg. Next, the control unit 1a generates linked data DL by linking the extracted data segments D1 and D2.

[Step S4] The control unit 1a determines a communication risk based on certain information included in the linked data DL. The certain information is the commands and the size of the file included in the linked data DL.

Thus, the control unit 1a determines a risk based on the commands and the file size. For example, assuming that the risk of the operation based on the command cd3 is the highest among the commands cd1 to cd4 and that the threshold of the file size is 3 MB, the command cd3 is included in the linked data DL and the size of the file, which is 1 MB, included in the linked data DL is equal to or less than the threshold. Thus, in this case, the linked data DL is determined to have the highest risk.

[Step S5] The control unit 1a collects file information from the file included in the linked data based on the risk determined in step S4. For example, the meta information, the file hash value, and the file main body of the file are collected as the file information.

The control unit 1a adaptively collects at least one of the meta information, the file hash value, and the file main body from the file included in the linked data based on the risk level. For example, from the linked data DL, which has been determined to have the highest risk, the meta information, the file hash value, and the file main body are collected as the file information.

As described above, the information processing apparatus 1 divides communication data into sessions, links sessions which have identical identification information and whose session interval is equal to or less than a threshold, and collects file information based on a communication risk from the linked session data. In this way, data is efficiently extracted based on a risk.

[Second Embodiment]

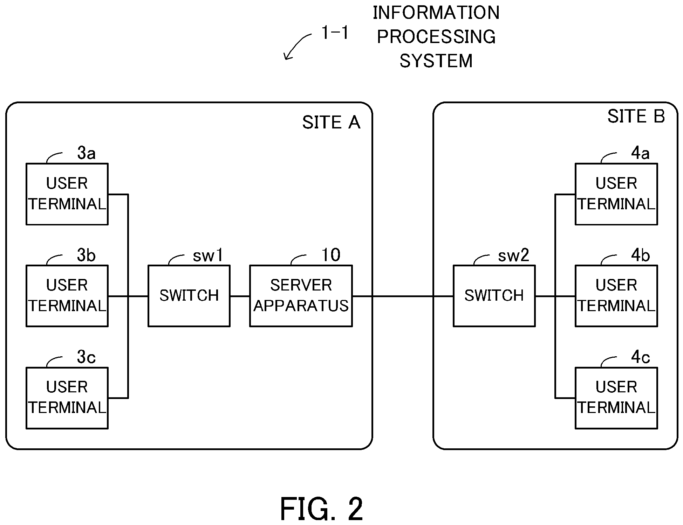

Next, a second embodiment will be described. FIG. 2 illustrates an example of an information processing system according to a second embodiment. This information processing system 1-1 includes a server apparatus 10, switches sw1 and sw2, and user terminals 3a, 3b, 3c, 4a, 4b, and 4c. The server apparatus 10 realizes the functions of the information processing apparatus 1 in FIG. 1.

The server apparatus 10, the switch sw1, and the user terminals 3a, 3b, and 3c are included at a site A, and the switch sw2 and the user terminals 4a, 4b, and 4c are included at a site B. The site A and the site B are connected to each other by a network not illustrated.

The server apparatus 10 determines communication risk levels of communication data flowing from the user terminals 3a, 3b, and 3c to the user terminals 4a, 4b, and 4c and collects predetermined file information from files included in the communication data. Alternatively, the server apparatus 10 determines communication risk levels of communication data flowing from the user terminals 4a, 4b, and 4c to the user terminals 3a, 3b, and 3c and collects predetermined file information from files included in the communication data.

<Functional Block>

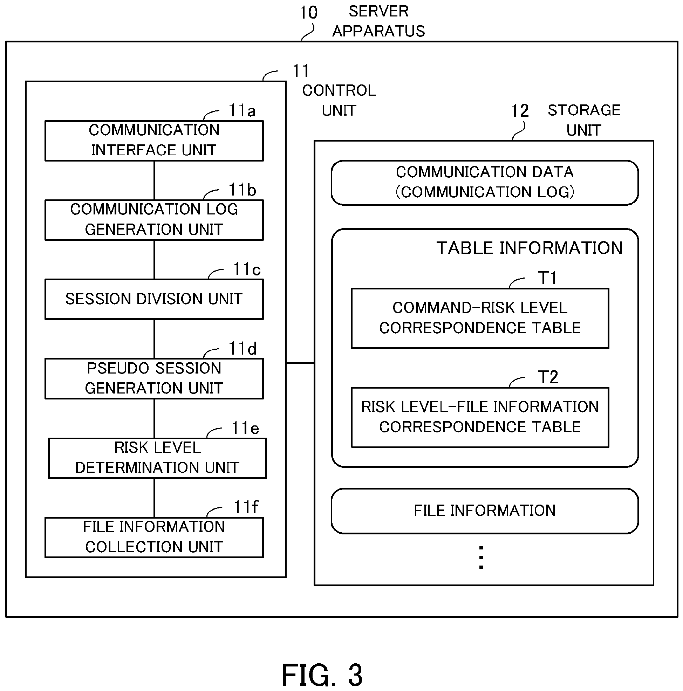

FIG. 3 illustrates an example of a functional block diagram of a server apparatus. The server apparatus 10 includes a control unit 11 and a storage unit 12. The control unit 11 realizes the functions of the control unit 1a in FIG. 1, and the storage unit 12 realizes the functions of the storage unit 1b in FIG. 1.

The control unit 11 includes a communication interface unit 11a, a communication log generation unit 11b, a session division unit 11c, a pseudo session generation unit 11d, a risk level determination unit 11e, and a file information collection unit 11f.

By performing communication interface processing via a network connected to the server apparatus 10, the communication interface unit 11a receives communication data (packets) via the network. The communication log generation unit 11b analyzes the received communication data and generates (reconstructs) a communication log based on executed operation commands or file accesses from the communication data.

The session division unit 11c divides the communication log into sessions based on a remote management operation protocol (a protocol designed to display a file stored in a remote computing device on a user terminal so that the file becomes accessible) and generates session data segments. For example, the remote management operation protocol is Server Message Block (SMB).

The pseudo session generation unit 11d extracts, from the session data segments, a plurality of session data segments which have identical command execution account and whose session interval is equal to or less than a predetermined threshold. Next, the pseudo session generation unit 11d generates pseudo session data (corresponds to the linked data in FIG. 1) by linking the extracted session data segments.

The risk level determination unit 11e determines a risk level based on the commands and the size of a file included in the pseudo session data. The file information collection unit 11f collects file information based on the risk level from the file included in the pseudo session data.

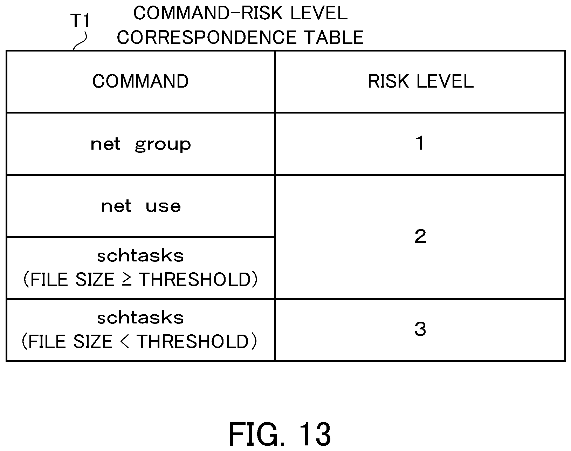

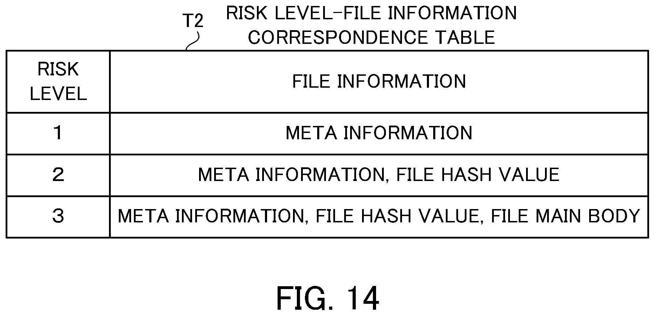

The storage unit 12 stores the communication data (the communication log), table information, the collected file information, etc. In addition, the storage unit 12 stores, for example, control information about the operation of the server apparatus 10. Examples of the table information include a command-risk level correspondence table T1 indicating a correspondence relationship between commands and risk levels and a risk level-file information correspondence table T2 indicating a correspondence relationship between risk levels and file information that needs to be collected (which will be described below with reference to FIGS. 13 and 14).

<Hardware>

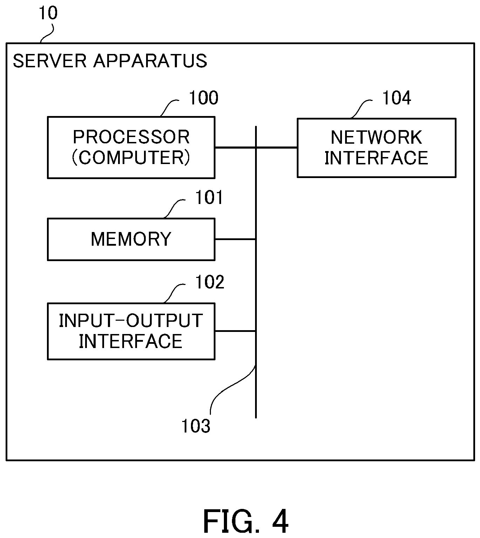

FIG. 4 illustrates an example of a hardware configuration of the server apparatus. The server apparatus 10 is comprehensively controlled by a processor (a computer) 100. The processor 100 realizes the functions of the control unit 11.

The processor 100 is connected to a memory 101, an input-output interface 102, and a network interface 104 via a bus 103.

The processor 100 may be a multi-processor. The processor 100 is, for example, a central processing unit (CPU), a micro processing unit (MPU), a digital signal processor (DSP), an application specific integrated circuit (ASIC), or a programmable logic device (PLD). The processor 100 may be a combination of at least two of a CPU, an MPU, a DSP, an ASIC, and a PLD.

The memory 101 realizes the functions of the storage unit 12 and is used as a main storage device of the server apparatus 10. An operating system (OS) program and at least part of application programs executed by the processor 100 are temporarily stored in the memory 101. Various kinds of data needed for processing performed by the processor 100 is also stored in the memory 101.

In addition, the memory 101 is also used as an auxiliary storage device of the server apparatus 10 and holds the OS program, application programs, and various kinds of data. Examples of the memory 101 include, as an auxiliary storage device, a semiconductor storage device such as a flash memory or a solid state drive (SSD) and a magnetic recording medium such as a hard disk drive (HDD).

Examples of the peripheral device connected to the bus 103 include the input-output interface 102 and the network interface 104. An information input device such as a keyboard and a mouse is connectable to the input-output interface 102, and the input-output interface 102 transmits signals transmitted from the information input device to the processor 100.

The input-output interface 102 also functions as a communication interface for connection to a peripheral device. For example, an optical drive device that reads out data recorded on an optical disc by using laser light or the like may be connected to the input-output interface 102. The optical disc is, for example, a Blu-ray Disc (trademark), a compact disc read-only memory (CD-ROM), or a CD-recordable (CD-R)/CD-rewritable (CD-RW).

In addition, the input-output interface 102 is connectable to a memory device or a memory reader/writer. The memory device is a recording medium that is able to communicate with the input-output interface 102. The memory reader/writer is a device that is able to write or read data on a memory card. The memory card is a card-type recording medium.

The network interface 104 connects to a network to perform network interface control. For example, a network interface card (NIC), a wireless local area network (LAN) card, or the like may be used as the network interface 104. Data received by the network interface 104 is outputted to the memory 101 or the processor 100.

The hardware configuration as described above realizes the processing functions of the server apparatus 10. For example, the server apparatus 10 is able to perform the processing according to the present embodiment by causing the processor 100 to execute a predetermined program.

For example, by executing a program recorded in a computer-readable recording medium, the server apparatus 10 realizes the processing functions according to the embodiments. The program in which the contents of the processing to be performed by the server apparatus 10 are written may be recorded in various recording media.

For example, the program to be executed by the server apparatus 10 may be stored in an auxiliary storage device. The processor 100 loads at least part of the program in an auxiliary storage device to a main storage device and executes the program.

In addition, the program may be recorded in a portable recording medium such as an optical disc, a memory device, or a memory card. For example, after the program stored in a portable recording medium is installed in an auxiliary storage device by the processor 100, the program becomes executable. The processor 100 may execute the program by reading the program directly from the portable recording medium.

<Collection of File Information (When Pseudo Session Data is not Generated)>

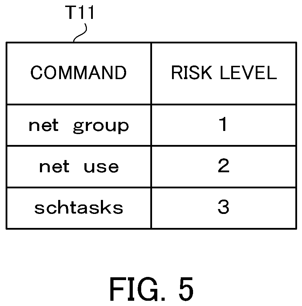

Next, before the second embodiment is described in detail, an operation of and a problem with a server apparatus (which will be referred to as a server apparatus 20) that collects file information without generating pseudo session data will be described with reference to FIGS. 5 to 8.

FIG. 5 illustrates an example of table information indicating a correspondence relationship between commands and risk levels. A table T11 includes commands and risk levels as its columns. In the table T11, the commands included in a communication log and the risk levels associated with the commands are registered.

In the example in FIG. 5, (command, risk level) is registered. Specifically, (net group, 1), (net use, 2), and (schtasks, 3) are registered (a higher risk level indicates a higher risk).

In FIG. 5, net group is a reference command for displaying, for example, a list of account information to which an apparatus on which a remote management operation is performed (a remote management operation target apparatus) belongs on an apparatus that performs the remote management operation (a remote management operation execution apparatus).

In addition, net use is a connection command for connecting the remote management operation execution apparatus to a shared resource (shared folder) of the remote management operation target apparatus. In addition, schtasks is an update command for allowing the remote management operation execution apparatus to control task processing of a task scheduler of the remote management operation target apparatus.

When an attack is received through the remote management operation execution apparatus, among the above commands, schtasks is the command having the highest risk (a command that is most probably the cause of further spread of a virus). Thus, schtasks is assigned 3 as its risk level. A command having the next highest risk is net use, which is assigned 2 as its risk level. Among these three commands, a command having the lowest risk is net group, which is assigned 1 as its risk level.

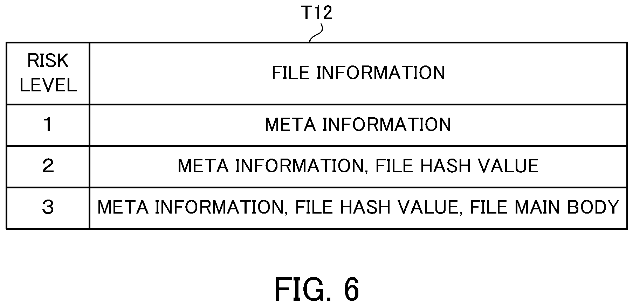

FIG. 6 illustrates an example of table information indicating a correspondence relationship between risk levels and file information. A table T12 includes risk levels and file information as its columns. In the table T12, file information that needs to be collected is registered per risk level.

In the example in FIG. 6, (risk level, file information) is registered. Specifically, (1, meta information), (2, meta information and file hash value), and (3, meta information, file hash value, and file main body) are registered.

That is, when the risk level is 1, the file information that needs to be collected from a file is set to be only meta information of the file. When the risk level is 2, the file information that needs to be collected from a file is set to be the meta information of the file and a file hash value of the file. When the risk level is 3, the file information that needs to be collected from a file is set to be the meta information of the file, the file hash value of the file, and a main body of the file.

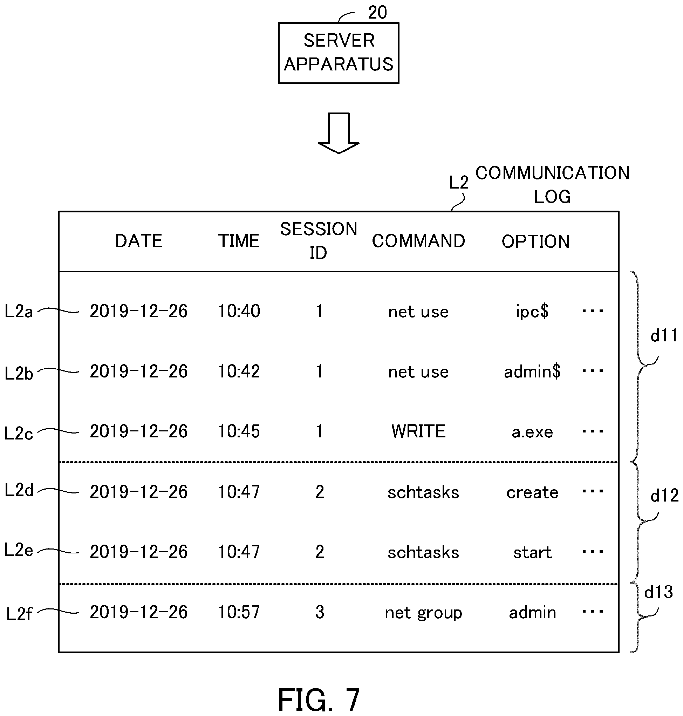

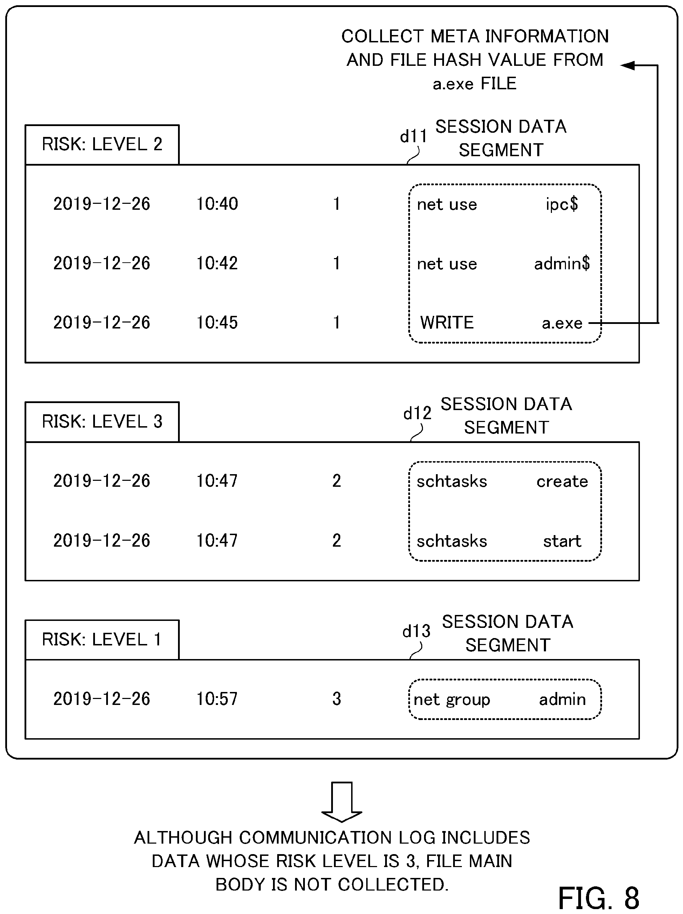

FIGS. 7 and 8 each illustrate an example of an operation of dividing a communication log into sessions and collecting file information.

In FIG. 7, the server apparatus 20 receives communication data on which a remote management operation has been performed and generates a communication log L2 from the received communication data. The communication log L2 includes dates, time, session IDs, command, and options as its columns.

In the communication log L2, (2019-12-26, 10:40, 1, net use, ipc$) is recorded in a log L2a. This log L2a indicates a request for connection to a shared resource ipc$ based on the net use command at 10:40 on 2019-12-26.

In addition, (2019-12-26, 10:42, 1, net use, admin$) is recorded in a log L2b. This log L2b indicates a request for connection to a shared folder admin$ based on the net use command at 10:42 on 2019-12-26.

In addition, (2019-12-26, 10:45, 1, WRITE, a.exe) is recorded in a log L2c. This log L2c indicates writing of an a.exe file in the shared folder admin$ based on a WRITE command at 10:45 on 2019-12-26.

In addition, (2019-12-26, 10:47, 2, schtasks, create) is recorded in a log L2d. This log L2d indicates task registration (creation) in a task scheduler based on the schtasks command at 10:47 on 2019-12-26.

In addition, (2019-12-26, 10:47, 2, schtasks, start) is recorded in a log L2e. This log L2e indicates start of execution of a task registered based on the schtasks command at 10:47 on 2019-12-26.

In addition, (2019-12-26, 10:57, 3, net group, admin) is recorded in a log L2f. This log L2f indicates display of a list of an admin group based on the net group command at 10:57 on 2019-12-26.

The log L2a is a remote management operation relating to connection to a shared resource, and the logs L2b and L2c are remote management operations relating to writing of a file in a shared folder. These remote management operations are assigned 1 as their session ID. In addition, the logs L2d and L2e are remote management operations relating to task processing, and these remote management operations are assigned 2 as their session ID. In addition, the log L2f is a remote management operation relating to display of account information, and this remote management operation is assigned 3 as its session ID.

The server apparatus 20 divides this communication log L2 into sessions. That is, the communication log L2 is divided into a session data segment d11 whose session ID is 1, a session data segment d12 whose session ID is 2, and a session data segment d13 whose session ID is 3.

In FIG. 8, the server apparatus 20 determines the risk levels of the session data segments d11, d12, and d13 based on the table T11 illustrated in FIG. 5. Because the session data segment d11 includes the net use command, the risk level is determined to be 2. Because the session data segment d12 includes the schtasks command, the risk level is determined to be 3. In addition, because the session data segment d13 includes the net group command, the risk level is determined to be 1.

After determining the risk levels, the server apparatus 20 collects file information from the session data segments d11, d12, and d13. In this case, the session data segments d12 and d13 do not include a file, and the session data segment d11 includes a file. Thus, file information is collected from the file included in the session data segment d11.

The session data segment d11 includes the a.exe file, and the a.exe file is associated with the net use command whose risk level is 2.

Thus, based on the table T12 illustrated in FIG. 6, the server apparatus 20 collects, as file information, meta information and a file hash value from the a.exe file. Thus, from the communication log L2, the meta information and the file hash value are collected as the file information and stored in a storage.

However, in the case of the above control performed by the server apparatus 20, the file information collection accuracy is low, and the file information that needs to be collected is insufficient. The reason is as follows. Because the communication log L2 includes the schtasks command whose risk level is 3, meta information, a file hash value, and a file main body need to be collected from the communication log L2 as the file information. However, only the meta information and file hash value are collected by the above control.

This problem is due to the fact that the a.exe file is not associated with the schtasks command whose risk level is 3. If division control is performed on the communication log L2 such that the a.exe file is associated with the schtasks command whose risk level is 3, the file main body is also collected as part of the file information.

Next, the reason why different file information needs to be collected based on a risk level will be described. The above commands such as net use and schtasks are commands normally used by server administrators in their normal operations.

Thus, if the file main bodies of all files written based on remote management operations by any commands are collected and stored in a storage, the capacity of the storage becomes scarce.

In addition, if such file information collection control is performed, when an attack is actually conducted, an unauthorized file is buried in a large number of files. That is, it becomes difficult to detect the unauthorized file from the normal files.

Because of the above reasons, different file information is collected based on a risk level. By collecting a file main body from a file with a high probability of being used by an attacker, the file information collection accuracy is improved further. The embodiments have been made in view of this point. According to the embodiments, the file information collection accuracy is improved, and data relating to a communication having a high risk is efficiently extracted.

<Collection of File Information according to the Embodiments (When Pseudo Session Data is Generated)>

Next, an operation according to the second embodiment will be described in detail. The server apparatus 10 according to the second embodiment performs division control on a communication log (generates pseudo session data) such that the schtasks command assigned 3 as its risk level is associated, for example. In addition, the server apparatus 10 also performs file size determination processing such that a file main body is also accurately collected from a file having a high risk level.

(Generation of Communication Log)

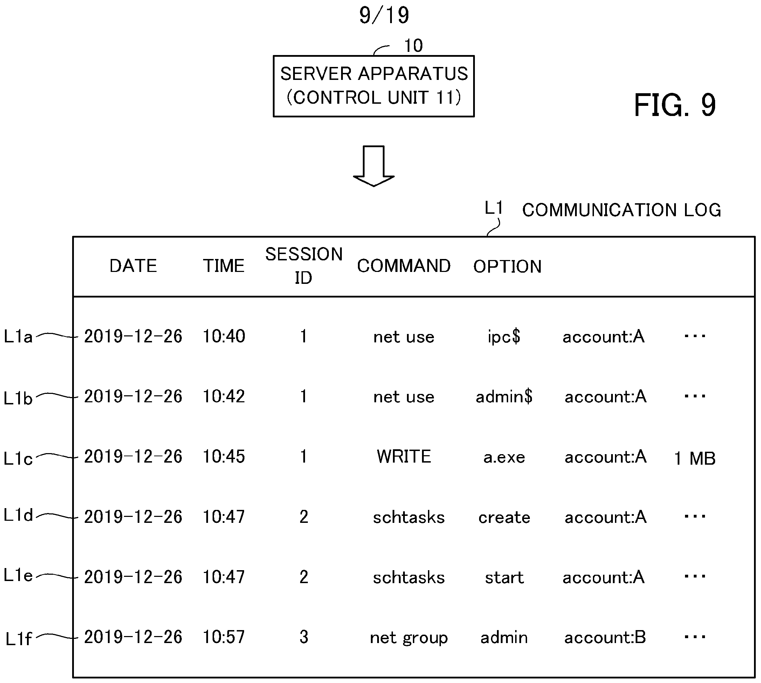

FIG. 9 illustrates an example of a communication log. The control unit 11 in the server apparatus 10 receives communication data on which a remote management operation has been performed and generates a communication log L1 from the received communication data. The communication log L1 includes dates, time, session IDs, commands, and options as its columns.

In the communication log L1, (2019-12-26, 10:40, 1, net use, ipc$, account:A) is recorded in a log L1a. This log L1a indicates a request for connection to a shared resource ipc$ based on a net use command by an account A at 10:40 on 2019-12-26.

In addition, (2019-12-26, 10:42, 1, net use, admin$, account:A) is recorded in a log L1b. This log L1b indicates a request for connection to a shared folder admin$ based on the net use command by the account A at 10:42 on 2019-12-26.

In addition, (2019-12-26, 10:45, 1, WRITE, a.exe, account:A, 1 MB) is recorded in a log L1c. This log L1c indicates writing of an a.exe file having a file size of 1 MB in the shared folder admin$ based on a WRITE command by the account A at 10:45 on 2019-12-26.

In addition, (2019-12-26, 10:47, 2, schtasks, create, account:A) is recorded in a log L1d. This log L1d indicates task registration (creation) in a task scheduler based on a schtasks command by the account A at 10:47 on 2019-12-26.

In addition, (2019-12-26, 10:47, 2, schtasks, start, account:A) is recorded in a log L1e. This log L1e indicates start of execution of a task registered based on the schtasks command by the account A at 10:47 on 2019-12-26.

In addition, (2019-12-26, 10:57, 3, net group, admin, account:B) is recorded in a log L1f. This log L1f indicates display of a list of an admin group based on a net group command by an account B at 10:57 on 2019-12-26.

The log L1a is a remote management operation relating to connection to a shared resource, and the logs L1b and L1c are remote management operations relating to writing of a file in the shared folder. These remote management operations are assigned 1 as their session ID. In addition, the logs L1d and L1e are remote management operations relating to task processing, and these remote management operations are assigned 2 as their session ID. In addition, the log L1f is a remote management operation relating to display of account information, and this remote management operation is assigned 3 as its session ID.

(Generation of Session Data Segment)

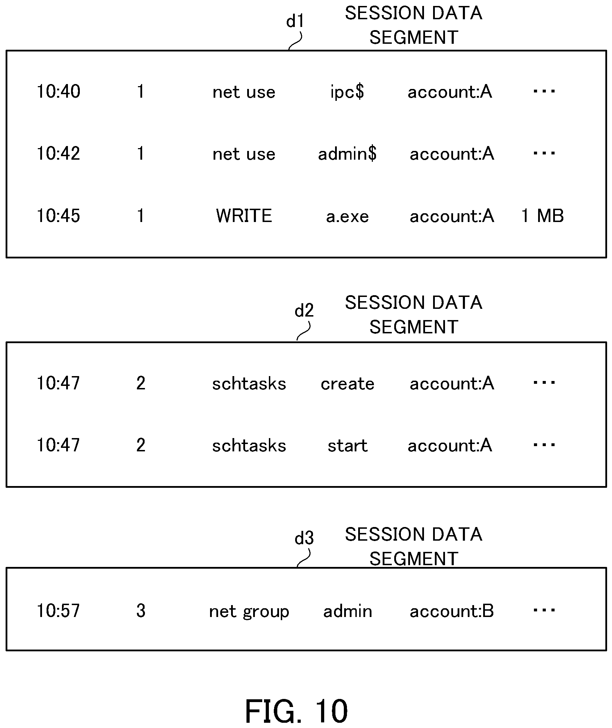

FIG. 10 illustrates examples of session data segments. The control unit 11 divides the communication log L1 into sessions. That is, the communication log L1 is divided into session data segment d1 whose session ID is 1, a session data segment d2 whose session ID is 2, and a session data segment d3 whose session ID is 3.

(Session Interval)

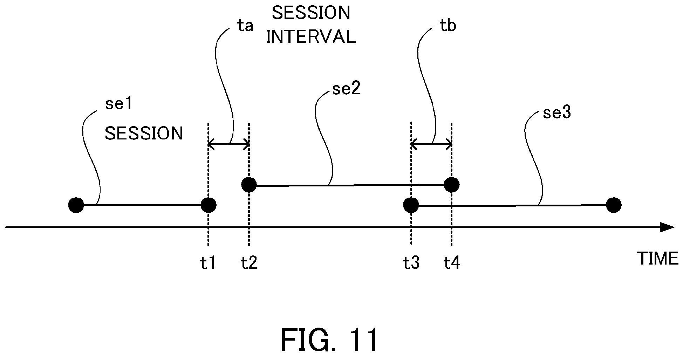

Next, session intervals used for generating pseudo session data will be described. FIG. 11 illustrates examples of session intervals. The horizontal axis indicates time. The following description assumes that sessions se1, se2, and se3 have been performed continuously as illustrated in FIG. 11.

When the end time of the session se1 is t1 and the start time of the session se2 is t2 (> t1), the time interval between time t1 and time t2 is the session interval ta (a positive value in this case) between the sessions se1 and se2.

In addition, when the end time of the session se2 is t4 and the start time of the session se3 is t3 (< t4), the time interval between time t3 and time t4 is the session interval tb (a negative value in this case) between the sessions se2 and se3.

(Threshold of Session Interval)

For example, an average value of session intervals observed in an environment to which the control of the server apparatus 10 is applied is set as the threshold of session intervals. The following description assumes that the start time of a session observed by a transmission source and a transmission destination is $t_s$, the end time of the session is $t_e$, and a session interval $t_{int}$ is calculated by $t_{int} = t_e - t_s$.

In this case, assuming that the session interval observed in the environment is T = {$t_{int,\ 1}$, $t_{int,\ 2}$, $t_{int,\ 3}$, ..., $t_{int,\ n}$}, a session interval Str, is calculated by the following equation (1) in which n denotes the total number of data.

$$S_{th} = \frac{1}{n} \sum_{i=1}^{n} \left| t_{int,i} \right| \qquad \cdots (1)$$

(Generation of Pseudo Session Data)

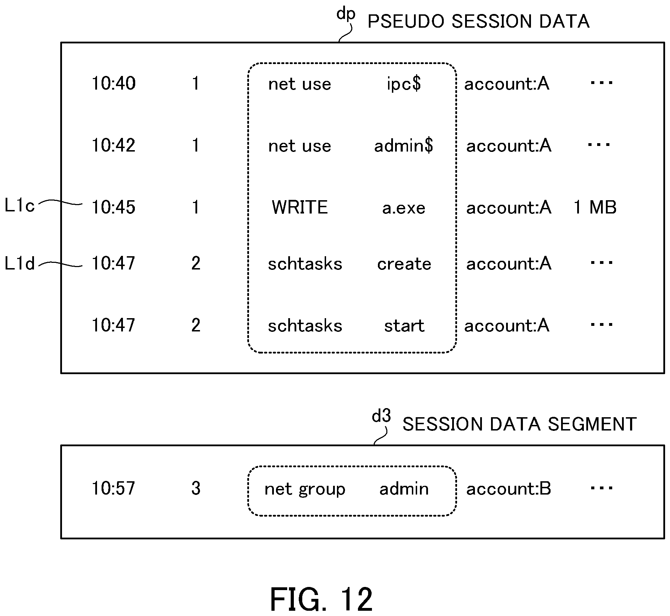

FIG. 12 illustrates an example of generation of pseudo session data. After generating the session data segments as illustrated in FIG. 10, the control unit 11 generates pseudo session data. The control unit 11 generates pseudo session data by linking, among the plurality of session data segments, session data segments which have an identical account (or an identical credential) and whose session interval is equal to or less than a threshold.

First, the control unit 11 extracts session data segments having an identical account from the session data segments d1, d2, and d3. In this case, because the session data segments d1 and d2 have the account A and the session data segment d3 have the account B, the session data segments d1 and d2 having the identical account A are extracted.

Next, the control unit 11 determines whether the session interval between the session data segments d1 and d2 is equal to or less than the threshold. The end time of the session data segment d1, that is, the time of the log L1c, is 10:45. In addition, the start time of the session data segment d2, that is, the time of the log L1d, is 10:47.

Thus, the session interval between the session data segments d1 and d2 is 2 minutes. Assuming that the threshold of the session interval is 5 minutes, the session interval between the session data segments d1 and d2 is equal to or less than the threshold. That is, the condition is met.

Thus, the control unit 11 generates pseudo session data dp by linking the session data segments d1 and d2 which have the identical account and whose session interval is equal to or less than the threshold.

(Table Structure)

FIG. 13 illustrates an example of a command-risk level correspondence table. A command-risk level correspondence table T1 includes commands and risk levels as its columns. The risk levels associated with their respective commands included in the communication log are registered in advance.

In the example in FIG. 13, (command, risk level) is registered. Specifically, (net group, 1), (net use, 2), (schtasks (file size ≥ threshold), 2), and (schtasks (file size < threshold), 3) are registered.

In FIG. 13, net group is a reference command for referring to information, and net use is a connection command for connection to a shared resource. In addition, schtasks is an update command for updating data processing.

As in FIG. 5, the net group command is assigned 1 as its risk level, and the net use command is assigned 2 as its risk level. However, the risk level settings for schtasks differ from the example in FIG. 5.

In the case of the server apparatus 10, although the same schtasks command is used, if the size of a file associated with the schtasks command is equal to or more than a threshold, the schtasks command is assigned 2 as its risk level. In addition, if the size of a file associated with the schtasks command is less than the threshold, the schtasks command is assigned 3 as its risk level.

FIG. 14 illustrates an example of a risk level-file information correspondence table. A risk level-file information correspondence table T2 includes risk levels and file information as its columns, and file information that needs to be collected based on risk levels are registered.

In the example in FIG. 14, (risk level, file information) is registered. Specifically, (1, meta information), (2, meta information and file hash value), and (3, meta information, file hash value, and file main body) are registered.

That is, if the risk level is 1, the file information that needs to be collected from a file is only the meta information of the file. Examples of the meta information include the name of the file, the extension of the file, and a time stamp (information indicating when the file was changed or modified).

In addition, if the risk level is 2, the file information that needs to be collected from a file is the meta information of the file and the file hash value of the file. In addition, if the risk level is 3, the file information that needs to be collected from a file is the meta information of the file, the file hash value of the file, and the main body of the file. In this way, when the risk level is higher, more kinds of file information are collected from the extracted file.

<Threshold of File Size>

The threshold (upper limit value) of the file size is set by adding a standard deviation to an average calculated from the sizes of the actual files whose kinds differ from the extensions previously observed in the environment to which the control of the server apparatus 20 is applied or calculated from the sizes of the executable format files.

Assuming that the sizes of the actual files whose kinds differ from the extensions previously observed in the environment or the sizes of the executable format files are represented by $S = \{S_1, S_2, S_3, ..., S_n\}$, an average $\mu$ is represented by the following equation (2) (n is the total number of data). Thus, a threshold $F_{th}$ of the file size is calculated by the following equation (3) in which $x_i$ is an individual value.

$$\mu = \frac{1}{n}\sum_{i=1}^{n} S_i \quad \cdots (2)$$

$$F_{th} = \mu + \sqrt{\sum_{i=1}^{n} \frac{1}{n}(x_i - \mu)^2} \quad \cdots (3)$$

In many cases, the size of an execution file used in a normal application is about 5 MB to 10 MB. However, in many cases, malware file is, for example, several hundred KB to 5 MB or less. Thus, the threshold (upper limit value) of the file size is set as described above, to determine an unauthorized file.

(Determination of Risk Levels)

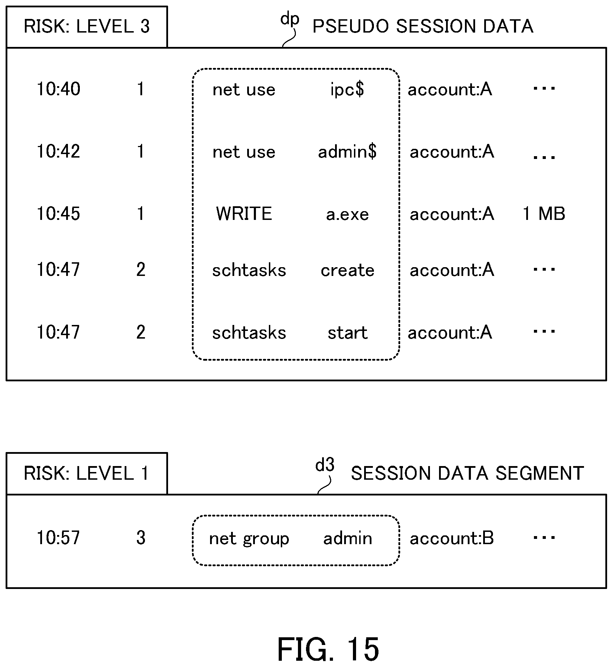

FIG. 15 illustrates an example of determination of risk levels. Based on the command-risk level correspondence table T1 illustrated in FIG. 13, the control unit 11 determines the risk levels of the pseudo session data dp and the session data segment d3.

Herein, the threshold of the file size is set to 3 MB. The pseudo session data dp includes the schtasks command and a file having a size of 1 MB.

Thus, since the pseudo session data dp has the schtasks command associated with a file whose file size is less than the threshold, the control unit 11 determines the risk level to be 3, based on the command-risk level correspondence table T1. In addition, because the session data segment d3 includes the net group command, the control unit 11 determines the risk level to be 1.

(Collection of File Information)

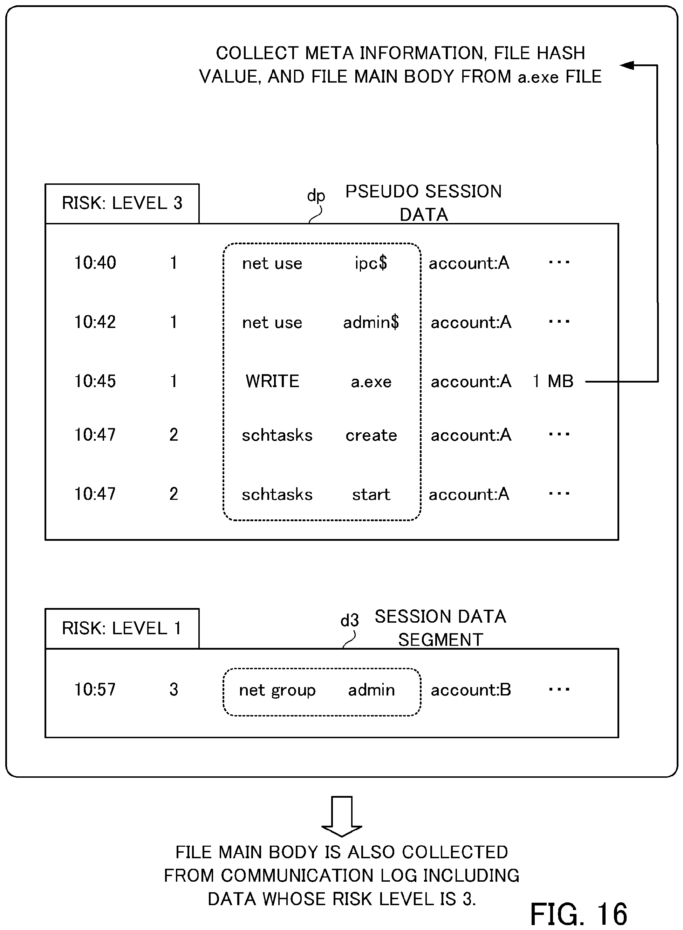

FIG. 16 illustrates an example of collection of file information. After determining the risk levels, the control unit 11 collects file information from the pseudo session data dp and the session data segment d3.

In this case, no file is included in the session data segment d3, and a file is included in the pseudo session data dp. Thus, file information is collected from the file included in the pseudo session data dp.

Specifically, an a.exe file is included in the pseudo session data dp, and this a.exe file is associated with the schtasks command assigned 3 as its risk level.

Thus, based on the risk level-file information correspondence table T2 illustrated in FIG. 14, the control unit 11 collects meta information, a file hash value, and a file main body from the a.exe file as the file information. Thus, from the communication log L1, the meta information, the file hash value, and the file main body are collected as the file information of an unauthorized file and are stored in the storage unit 12 (a storage).

As described above, the control unit 11 performs the division control of generating the pseudo session data from the communication log L1 and performs the file size determination. In this way, the a.exe file is associated with a risk level corresponding to collection of the file main body as well, and therefore, the file main body is also collected as part of the file information.

(Flowchart)

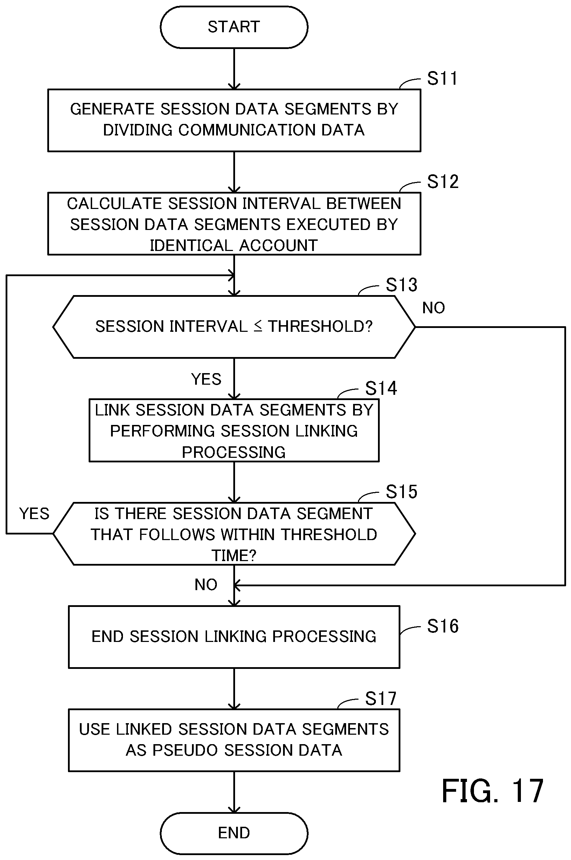

FIG. 17 is a flowchart illustrating an example of an operation of generating pseudo session data.

[Step S11] The control unit 11 generates session data segments by dividing communication data.

[Step S12] The control unit 11 calculates a session interval between session data segments executed by an identical account (or an identical credential).

[Step S13] The control unit 11 determines whether the session interval is equal to or less than a threshold. If the session interval is equal to or less than the threshold, the processing proceeds to step S14. If the session interval is more than the threshold, the processing proceeds to step S16.

[Step S14] The control unit 11 links the session data segments by performing session linking processing.

[Step S15] The control unit 11 determines whether there is a session data segment that follows within the threshold time. If there is such a session data segment, the processing returns to step S13. If not, the processing proceeds to step S16.

[Step S16] The control unit 11 ends the session linking processing.

[Step S17] The control unit 11 uses the linked session data segments as pseudo session data.

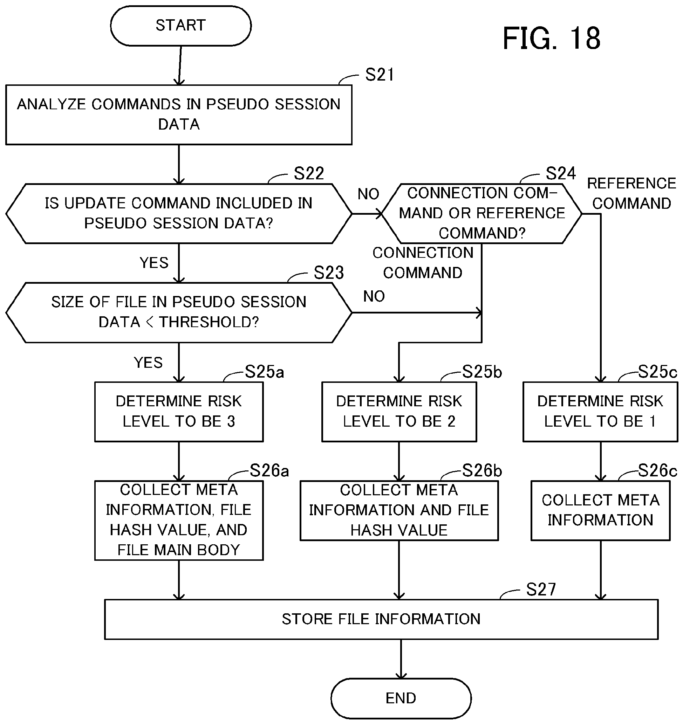

FIG. 18 is a flowchart illustrating an example of an operation of collecting file information based on a risk level.

[Step S21] The control unit 11 analyzes the commands in the pseudo session data.

[Step S22] The control unit 11 determines whether an update command (for example, schtasks) is included in the pseudo session data. If an update command is included, the processing proceeds to step S23. If no update command is included, the processing proceeds to step S24.

[Step S23] The control unit 11 determines whether the size of a file included in the pseudo session data is less than a threshold. If the size of a file is less than a threshold, the processing proceeds to step S25a. If the size of a file is equal to or more than the threshold, the processing proceeds to step S25b.

[Step S24] The control unit 11 determines whether a command in the pseudo session data is a connection command (for example, net use) or a reference command (for example, net group). If a connection command is included in the pseudo session data, the processing proceeds to step S25b. If a reference command is included in the pseudo session data, the processing proceeds to step S25c.

[Step S25a] The control unit 11 determines the risk level of the pseudo session data to be 3.

[Step S25b] The control unit 11 determines the risk level of the pseudo session data to be 2.

[Step S25c] The control unit 11 determines the risk level of the pseudo session data to be 1.

[Step S26a] The control unit 11 collects meta information, a file hash value, and a file main body from the file included in the pseudo session data as the file information.

[Step S26b] The control unit 11 collects meta information and a file hash value from the file included in the pseudo session data as the file information.

[Step S26c] The control unit 11 collects meta information from the file included in the pseudo session data as the file information.

[Step S27] The control unit 11 stores the collected file information in the storage unit 12.

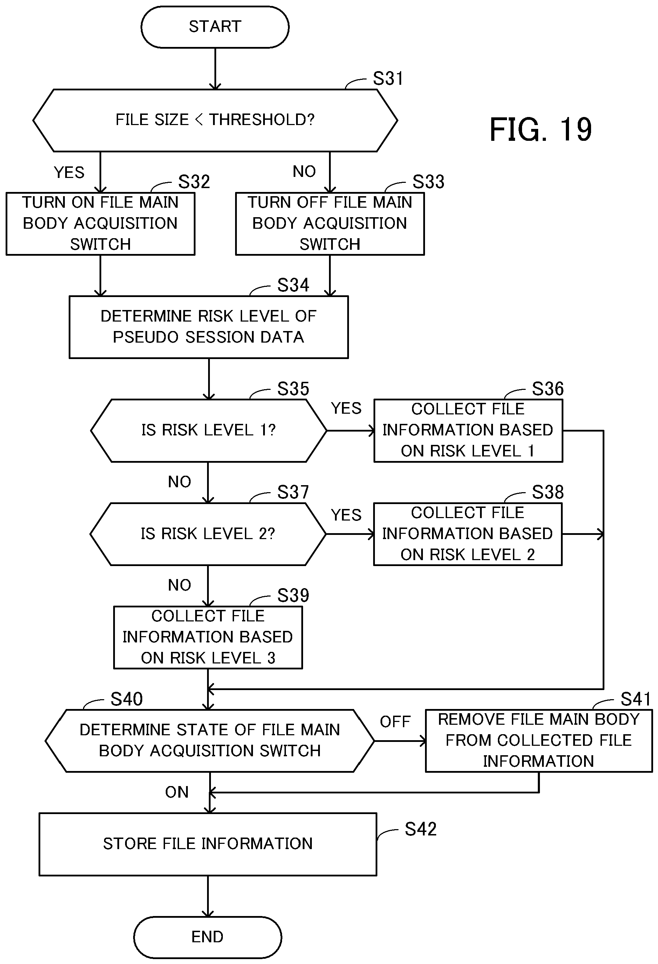

FIG. 19 is a flowchart illustrating an example of an operation of collecting file information based on a risk level. In the operation in FIG. 19, if a file is included in the pseudo session data with the risk level of 3, the file main body is temporarily collected, regardless of the size. If the file size is determined to be equal to or more than a threshold, the collected file is removed. If the file size is determined to be less than the threshold, the collected file is maintained.

[Step S31] The control unit 11 determines whether the size of a file written by a remote management operation in pseudo session data is less than a threshold. If the size is less than the threshold, the processing proceeds to step S32. If the size is equal to or more than the threshold, the processing proceeds to step S33.

[Step S32] The control unit 11 turns on a file main body acquisition switch for acquiring a file main body.

[Step S33] The control unit 11 turns off the file main body acquisition switch.

[Step S34] The control unit 11 determines the risk level of the pseudo session data.

[Step S35] The control unit 11 determines whether the determined risk level is 1. If the risk level is 1, the processing proceeds to step S36. If the risk level is not 1, the processing proceeds to step S37.

[Step S36] The control unit 11 collects file information (meta information) based on risk level 1. The processing proceeds to step S40.

[Step S37] The control unit 11 determines whether the determined risk level is 2. If the risk level is 2, the processing proceeds to step S38. If the risk level is not 2, the processing proceeds to step S39.

[Step S38] The control unit 11 collects the file information (meta information and file hash value) based on risk level 2. The processing proceeds to step S40.

[Step S39] The control unit 11 determines that the risk level is 3 and collects the file information (meta information, file hash value, and file main body) based on risk level 3.

[Step S40] The control unit 11 determines the state (on or off) of the file main body acquisition switch. If the file main body acquisition switch is off, the processing proceeds to step S41. If the file main body acquisition switch is on, the processing proceeds to step S42.

[Step S41] The control unit 11 removes the file main body from the collected file information.

[Step S42] The control unit 11 stores the collected file information in the storage unit 12.

(Advantageous Effects)

Next, advantageous effects obtained by application of the embodiments will be described. Because in many cases the file size of malware is equal to or less than 3 MB, the following description assumes that such files are collected.

Specifically, the following description assumes a situation in which a user performs an operation of writing a single file and updating the file within 5 minutes 100 times per day and that the rate of the update operations performed as different sessions from the file writing operations is 80%. The following description also assumes that operations of writing files, each of which has a size of 3 MB or less, are evenly performed during the day and the rate of the file writing operations accounts for 40% (40 cases/day) .

In this situation, before application of any one of the embodiments, the number of acquired files having a size of 3 MB or less (if the sessions whose session interval is 5 minutes or less are linked) is 8 (= 100 times × (1 - 0.8) × 0.4). In contrast, if any one of the embodiments is applied, the number increases to 40 cases (= 100 cases × 0.4), which is five times of the above file acquisition rate. That is, malware files are acquired more efficiently.

As described above, according to the embodiments, communication data is divided into sessions, session segments which have identical identification information and whose session interval is equal to or less than a threshold are linked, and file information is collected from the linked sessions based on a communication risk. In this way, the file information collection accuracy is improved, and data relating to a communication having a high risk is efficiently extracted. In addition, the whole picture of the attack is promptly understood. As a result, the attack is promptly managed, and the damage caused by the attack is minimized.

The information processing apparatus 1 and the server apparatus 10 according to the above-described embodiments are each realized by a computer. In this case, a program in which the processing contents of the functions of the information processing apparatus 1 or the server apparatus 10 are written is provided. By causing a computer to execute this program, the above processing functions are realized on the computer.

The program in which the processing contents are written may be recorded in a computer-readable recording medium. Examples of the computer-readable recording medium include a magnetic storage unit, an optical disc, a magneto-optical recording medium, and a semiconductor memory. Examples of the magnetic storage unit include a hard disk drive (HDD), a flexible disk (FD), and a magnetic tape. Examples of the optical disc include a CD-ROM/RW. Examples of the magneto-optical recording medium include a magneto optical disk (MO).

One way to distribute the program is to make commercially available portable recording media such as CD-ROMs in which the program is recorded. In addition, the program may be stored in a storage unit of a server computer, and the stored program may be forwarded to other computers from the server computer via a network.

For example, a computer that executes the program stores the program, which is recorded in a portable recording medium or forwarded from the server computer, in its storage unit. Next, the computer reads out the program from the storage unit and executes processing in accordance with the program. The computer may directly read out the program from the portable recording medium and perform processing in accordance with the program.

In addition, each time the computer receives the program from the server computer connected via a network, the computer may execute processing in accordance with the received program sequentially. At least part of the above processing functions may be realized by an electronic circuit such as a DSP, an ASIC, or a PLD.

Although the embodiments have thus been described as examples, the configuration of any one of the individual units described in the embodiments may be replaced by another unit having the equivalent function. In addition, any other component or process may be added. In addition, any two or more components (features) in the above embodiments may be linked together.

The above description simply indicates the principle of the present embodiments. In addition, many variations and modifications could be made by those skilled in the art. The embodiments are not limited to the exact configuration and application examples described above. All the relevant variations and equivalents should be deemed to fall within the scope of the embodiments on the basis of the accompanying claims and equivalents thereof.

Reference Signs List

1 information processing apparatus
1a control unit
1b storage unit
cd1, cd2, cd3, cd4 command
A, B identification information
D0 communication data
Dg group of data segments
D1, D2, D3 data segment
DL linked data

**Claims**

1. An information processing program that causes a computer to execute a process comprising:

    generating a group of data segments by dividing communication data into sessions;
    extracting, from the group of data segments, data segments which have identical identification information and whose session interval is equal to or less than a threshold;
    generating linked data by linking the extracted data segments;
    determining a communication risk based on certain information included in the linked data; and
    collecting file information based on the risk from a file included in the linked data.

2. The information processing program according to claim 1, wherein the certain information is a command included in the linked data and a file size of the file included in the linked data.

3. The information processing program according to claim 1, wherein the file information is at least one of meta information, a file hash value, and a file main body of the file.

4. The information processing program according to claim 2, wherein the command is used for a remote management operation.

5. The information processing program according to claim 2, wherein the process includes

determining, when the command is a reference command for referring to information, the risk of the linked data to be a lowest first risk,

determining, when the command is a connection command for connecting to a shared resource, the risk of the linked data to be a second risk higher than the first risk,

determining, when the command is an update command for updating data processing and when the file size of the file is equal to or more than a threshold, the risk of the linked data to be the second risk, and

determining, when the command is the update command and when the file size of the file is less than the threshold, the risk of the linked data to be a third risk higher than the second risk.

6. The information processing program according to claim 5, wherein the process includes

collecting, as the file information, meta information from the file included in the linked data determined to have the first risk,

collecting, as the file information, the meta information and a file hash value from the file included in the linked data determined to have the second risk, and

collecting, as the file information, the meta information, the file hash value, and a file main body from the file included in the linked data determined to have the third risk.

7. The information processing program according to claim 2, wherein the process includes

determining, when the command is a reference command for referring to information, the risk of the linked data to be a lowest first risk,

determining, when the command is a connection command for connecting to a shared resource, the risk of the linked data to be a second risk higher than the first risk,

determining, when the command is an update command for updating data processing, the risk of the linked data to be a third risk higher than the second risk,

collecting, as the file information, meta information from the file included in the linked data determined to have the first risk,

collecting, as the file information, the meta information and a file hash value from the file included in the linked data determined to have the second risk, and

collecting, as the file information, the meta information, the file hash value, and a file main body from the file included in the linked data determined to have the third risk and removing, when the file size of the file is equal to or more than a threshold, the collected file main body.

8. The information processing program according to claim 1, wherein the process includes setting, as the threshold of the session interval, an average value of session intervals in an environment in which the communication data is observed.

9. The information processing program according to claim 5 or 7, wherein the process includes calculating an average from sizes of files whose kinds differ from extensions previously used in an environment in which the communication data is observed or from sizes of executable format files and setting a value obtained by adding a standard deviation to the average as the threshold of the file size.

10. An information processing method comprising:

generating, by a computer, a group of data segments by dividing communication data into sessions;

extracting, by the computer, from the group of data segments, data segments which have identical identification information and whose session interval is equal to or less than a threshold;

generating, by the computer, linked data by linking the extracted data segments;

determining, by the computer, a risk on communication based on certain information included in the linked data; and

collecting, by the computer, file information based on the risk from a file included in the linked data.

11. An information processing apparatus comprising:

a storage unit configured to store communication data; and
a control unit configured to execute a process including:

generating a group of data segments by dividing the communication data into sessions;
extracting, from the group of data segments, data segments which have identical identification information and whose session interval is equal to or less than a threshold;
generating linked data by linking the extracted data segments;
determining a risk on communication based on certain information included in the linked data; and
collecting file information based on the risk from a file included in the linked data.

FIG. 1

INFORMATION
PROCESSING
SYSTEM

1-1

SITE A

3a

USER
TERMINAL

3b

USER
TERMINAL

sw1

SWITCH

10

SERVER
APPARATUS

3c

USER
TERMINAL

sw2

SWITCH

SITE B

4a

USER
TERMINAL

4b

USER
TERMINAL

4c

USER
TERMINAL

FIG. 2

10   SERVER
APPARATUS

11   CONTROL
UNIT

12   STORAGE
UNIT

11a
COMMUNICATION
INTERFACE UNIT

11b
COMMUNICATION LOG
GENERATION UNIT

11c
SESSION DIVISION UNIT

11d
PSEUDO SESSION
GENERATION UNIT

11e
RISK LEVEL
DETERMINATION UNIT

11f
FILE INFORMATION
COLLECTION UNIT

COMMUNICATION DATA
(COMMUNICATION LOG)

TABLE INFORMATION

T1
COMMAND-RISK LEVEL
CORRESPONDENCE TABLE

T2
RISK LEVEL-FILE INFORMATION
CORRESPONDENCE TABLE

FILE INFORMATION

FIG. 3

10

SERVER APPARATUS

100
PROCESSOR
(COMPUTER)

104
NETWORK
INTERFACE

101
MEMORY

102
INPUT-OUTPUT
INTERFACE

103

FIG. 4

T11

| COMMAND | RISK LEVEL |
|---------|------------|
| net  group | 1 |
| net  use | 2 |
| schtasks | 3 |

# FIG. 5

T12

| RISK LEVEL | FILE INFORMATION |
|---|---|
| 1 | META INFORMATION |
| 2 | META INFORMATION, FILE HASH VALUE |
| 3 | META INFORMATION, FILE HASH VALUE, FILE MAIN BODY |

# FIG. 6

20
SERVER
APPARATUS

⇩

L2 COMMUNICATION
LOG

| | DATE | TIME | SESSION ID | COMMAND | OPTION | |
|---|---|---|---|---|---|---|
| L2a | 2019-12-26 | 10:40 | 1 | net use | ipc$ | · · · |
| L2b | 2019-12-26 | 10:42 | 1 | net use | admin$ | · · · |
| L2c | 2019-12-26 | 10:45 | 1 | WRITE | a.exe | · · · |
| L2d | 2019-12-26 | 10:47 | 2 | schtasks | create | · · · |
| L2e | 2019-12-26 | 10:47 | 2 | schtasks | start | · · · |
| L2f | 2019-12-26 | 10:57 | 3 | net group | admin | · · · |

d11
d12
d13

FIG. 7

COLLECT META INFORMATION
AND FILE HASH VALUE FROM
a.exe FILE

| RISK: LEVEL 2 | | | SESSION DATA SEGMENT d11 |
|---|---|---|---|
| 2019-12-26 | 10:40 | 1 | net use        ipc$ |
| 2019-12-26 | 10:42 | 1 | net use        admin$ |
| 2019-12-26 | 10:45 | 1 | WRITE          a.exe |

| RISK: LEVEL 3 | | | SESSION DATA SEGMENT d12 |
|---|---|---|---|
| 2019-12-26 | 10:47 | 2 | schtasks      create |
| 2019-12-26 | 10:47 | 2 | schtasks      start |

| RISK: LEVEL 1 | | | SESSION DATA SEGMENT d13 |
|---|---|---|---|
| 2019-12-26 | 10:57 | 3 | net group     admin |

⇩

ALTHOUGH COMMUNICATION LOG INCLUDES
DATA WHOSE RISK LEVEL IS 3, FILE MAIN
BODY IS NOT COLLECTED.

FIG. 8

9/19

10
┌─────────────────────────┐
│ SERVER APPARATUS        │
│ (CONTROL UNIT 11)       │
└─────────────────────────┘

⇨

# FIG. 9

L1 COMMUNICATION LOG

| | DATE | TIME | SESSION ID | COMMAND | OPTION | | |
|---|---|---|---|---|---|---|---|
| L1a | 2019-12-26 | 10:40 | 1 | net use | ipc$ | account:A | ⋯ |
| L1b | 2019-12-26 | 10:42 | 1 | net use | admin$ | account:A | ⋯ |
| L1c | 2019-12-26 | 10:45 | 1 | WRITE | a.exe | account:A | 1 MB |
| L1d | 2019-12-26 | 10:47 | 2 | schtasks | create | account:A | ⋯ |
| L1e | 2019-12-26 | 10:47 | 2 | schtasks | start | account:A | ⋯ |
| L1f | 2019-12-26 | 10:57 | 3 | net group | admin | account:B | ⋯ |

SESSION DATA
d1 ⟩ SEGMENT

| 10:40 | 1 | net use | ipc$ | account:A | ··· |
| 10:42 | 1 | net use | admin$ | account:A | ··· |
| 10:45 | 1 | WRITE | a.exe | account:A | 1 MB |

SESSION DATA
d2 ⟩ SEGMENT

| 10:47 | 2 | schtasks | create | account:A | ··· |
| 10:47 | 2 | schtasks | start | account:A | ··· |

SESSION DATA
d3 ⟩ SEGMENT

| 10:57 | 3 | net group | admin | account:B | ··· |

# FIG. 10

se1

SESSION

ta

SESSION
INTERVAL

se2

tb

se3

t1  t2        t3  t4

TIME

# FIG. 11

dp PSEUDO SESSION DATA

| | | | | | |
|---|---|---|---|---|---|
| 10:40 | 1 | net use | ipc$ | account:A | · · · |
| 10:42 | 1 | net use | admin$ | account:A | · · · |
| L1c ~ 10:45 | 1 | WRITE | a.exe | account:A | 1 MB |
| L1d ~ 10:47 | 2 | schtasks | create | account:A | · · · |
| 10:47 | 2 | schtasks | start | account:A | · · · |

d3 SESSION DATA SEGMENT

| | | | | | |
|---|---|---|---|---|---|
| 10:57 | 3 | net group | admin | account:B | · · · |

# FIG. 12

COMMAND-RISK LEVEL
T1   CORRESPONDENCE TABLE

| COMMAND | RISK LEVEL |
|---|---|
| net group | 1 |
| net use | 2 |
| schtasks<br>(FILE SIZE ≥ THRESHOLD) | |
| schtasks<br>(FILE SIZE < THRESHOLD) | 3 |

# FIG. 13

T2 RISK LEVEL-FILE INFORMATION
CORRESPONDENCE TABLE

| RISK LEVEL | FILE INFORMATION |
|---|---|
| 1 | META INFORMATION |
| 2 | META INFORMATION, FILE HASH VALUE |
| 3 | META INFORMATION, FILE HASH VALUE, FILE MAIN BODY |

# FIG. 14

| RISK: LEVEL 3 | | dp PSEUDO SESSION DATA | | | |
|---|---|---|---|---|---|
| 10:40 | 1 | net use | ipc$ | account:A | · · · |
| 10:42 | 1 | net use | admin$ | account:A | · · · |
| 10:45 | 1 | WRITE | a.exe | account:A | 1 MB |
| 10:47 | 2 | schtasks | create | account:A | · · · |
| 10:47 | 2 | schtasks | start | account:A | · · · |

| RISK: LEVEL 1 | | d3 SESSION DATA SEGMENT | | |
|---|---|---|---|---|
| 10:57 | 3 | net group | admin | account:B | · · · |

# FIG. 15

COLLECT META INFORMATION, FILE HASH
VALUE, AND FILE MAIN BODY FROM a.exe FILE

| RISK: LEVEL 3 | | dp | PSEUDO SESSION DATA | | | |
|---|---|---|---|---|---|---|
| 10:40 | 1 | net use | ipc$ | account:A | ⋯ | |
| 10:42 | 1 | net use | admin$ | account:A | ⋯ | |
| 10:45 | 1 | WRITE | a.exe | account:A | 1 MB | |
| 10:47 | 2 | schtasks | create | account:A | ⋯ | |
| 10:47 | 2 | schtasks | start | account:A | ⋯ | |

| RISK: LEVEL 1 | | d3 | SESSION DATA SEGMENT | | |
|---|---|---|---|---|---|
| 10:57 | 3 | net group | admin | account:B | ⋯ |

⇩

FILE MAIN BODY IS ALSO COLLECTED
FROM COMMUNICATION LOG INCLUDING
DATA WHOSE RISK LEVEL IS 3.

FIG. 16

START

GENERATE SESSION DATA SEGMENTS BY DIVIDING COMMUNICATION DATA — S11

CALCULATE SESSION INTERVAL BETWEEN SESSION DATA SEGMENTS EXECUTED BY IDENTICAL ACCOUNT — S12

SESSION INTERVAL ≤ THRESHOLD? — S13

NO

YES

LINK SESSION DATA SEGMENTS BY PERFORMING SESSION LINKING PROCESSING — S14

IS THERE SESSION DATA SEGMENT THAT FOLLOWS WITHIN THRESHOLD TIME? — S15

YES

NO

END SESSION LINKING PROCESSING — S16

USE LINKED SESSION DATA SEGMENTS AS PSEUDO SESSION DATA — S17

END

FIG. 17

FIG. 18

START

↓

ANALYZE COMMANDS IN PSEUDO SESSION DATA ⟋ S21

↓

IS UPDATE COMMAND INCLUDED IN PSEUDO SESSION DATA? ⟋ S22 — NO → CONNECTION COMMAND OR REFERENCE COMMAND? ⟋ S24 — REFERENCE COMMAND

YES ↓     CONNECTION COMMAND

SIZE OF FILE IN PSEUDO SESSION DATA < THRESHOLD? ⟋ S23 — NO →

YES ↓

DETERMINE RISK LEVEL TO BE 3 ⟋ S25a     DETERMINE RISK LEVEL TO BE 2 ⟋ S25b     DETERMINE RISK LEVEL TO BE 1 ⟋ S25c

↓     ↓     ↓

COLLECT META INFORMATION, FILE HASH VALUE, AND FILE MAIN BODY ⟋ S26a     COLLECT META INFORMATION AND FILE HASH VALUE ⟋ S26b     COLLECT META INFORMATION ⟋ S26c

↓     ↓     ↓

STORE FILE INFORMATION ⟋ S27

↓

END

# FIG. 19

```
                    START

                                    S31
            FILE SIZE < THRESHOLD?

   YES                          NO
          S32                            S33
   TURN ON FILE MAIN         TURN OFF FILE MAIN
   BODY ACQUISITION          BODY ACQUISITION
   SWITCH                     SWITCH

                    S34
          DETERMINE RISK LEVEL OF
          PSEUDO SESSION DATA

                    S35              S36
                              YES   COLLECT FILE
          IS RISK LEVEL 1?          INFORMATION BASED
                                    ON RISK LEVEL 1

          NO
                    S37              S38
                              YES   COLLECT FILE
          IS RISK LEVEL 2?          INFORMATION BASED
                                    ON RISK LEVEL 2

          NO
                    S39
          COLLECT FILE
          INFORMATION BASED
          ON RISK LEVEL 3

    S40
   DETERMINE STATE OF FILE MAIN    OFF    REMOVE FILE MAIN BODY    S41
   BODY ACQUISITION SWITCH                FROM COLLECTED FILE
                                          INFORMATION

           ON
                                                  S42
          STORE FILE INFORMATION

                    END
```

**INTERNATIONAL SEARCH REPORT**

| International application No. |
| --- |
| PCT/JP2020/022422 |

**A. CLASSIFICATION OF SUBJECT MATTER**
Int. Cl. G06F21/55(2013.01)i, G06F21/56(2013.01)i
FI: G06F21/55, G06F21/56

According to International Patent Classification (IPC) or to both national classification and IPC

**B. FIELDS SEARCHED**

Minimum documentation searched (classification system followed by classification symbols)
Int. Cl. G06F21/55, G06F21/56

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2015-179467 A (NTT DATA CORP.) 08 October 2015, claim 7, paragraphs [0015]-[0077], fig. 1-16 | 1-4, 8, 10, 11<br>5-7, 9 |
| Y | 乾真季他，インシデント対応において攻撃進行度に応じた情報を蓄積するネットワークフォレンジック方式の提案，2019 年暗号と情報セキュリティシンポジウム(SCIS2019)予稿集[USB], 15 January 2019, 3F1-2, 特に、「3 提案方式」(INUI, Maki et al. A Proposal of Network Forensic Method for Accumulating Necessary Information for Incident Response in Cyber Attack Progress. Proceedings of the 2019 Symposium on Cryptography and Information Security (SCIS2019)[USB]. In particular, "3. Proposal Method.") | 1-4, 8, 10, 11 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09.09.2020 | Date of mailing of the international search report<br>24.09.2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

| International application No. |
| --- |
| PCT/JP2020/022422 |

| Patent Documents referred to in the Report | Publication Date | Patent Family | Publication Date |
| --- | --- | --- | --- |
| JP 2015-179467 A | 08.10.2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002318734 A

- JP 2018041316 A